Europäisches Patentamt

European Patent Office

Office européen des brevets

(19)

(11) **EP 1 187 274 A1**

(12) **EUROPÄISCHE PATENTANMELDUNG**

(43) Veröffentlichungstag:
    **13.03.2002   Patentblatt 2002/11**

(51) Int Cl.⁷: **H01S 3/098**

(21) Anmeldenummer: **01810855.5**

(22) Anmeldetag: **05.09.2001**

(84) Benannte Vertragsstaaten:
    **AT BE CH CY DE DK ES FI FR GB GR IE IT LI LU MC NL PT SE TR**
    Benannte Erstreckungsstaaten:
    **AL LT LV MK RO SI**

(30) Priorität: **08.09.2000   EP 00810810**

(71) Anmelder: **Universität Bern**
    **3012 Bern (CH)**

(72) Erfinder:
    • **Schmid, Marc**
      **CH-3004 Bern (CH)**
    • **Graf, Thomas**
      **CH-3322 Urtenen (CH)**

(74) Vertreter: **Roshardt, Werner Alfred, Dipl.-Phys.**
    **Keller & Partner**
    **Patentanwälte AG**
    **Schmiedenplatz 5**
    **Postfach**
    **3000 Bern 7 (CH)**

(54) **Laserresonator zur Erzeugung polarisierter Laserstrahlung**

(57)     Bei dem Verfahren zur Erzeugung polarisierter Laserausgangsstrahlung **(27p)** mit einem Laserresonator **(15),** dessen aktives Medium **(19)** thermisch induzierte Doppelbrechung aufweist, erfahren die im Laserresonator **(15)** oszillierenden Strahlungsfelder **(23s, 25p)** keine Polarisationsselektion und aus den Strahlungsfeldern **(23s, 25p)** wird lediglich nur das Strahlungsfeld **(11p; 27p; 46p; 49p)** mit dem gewünschten Polarisationszustand **(p)** teilweise ausgekoppelt. Es wird hierzu ein Laserresonator **(15)** mit einem hochreflektierenden Resonatorspiegel **(17)** und einer Strahlungsauskoppeleinrichtung **(20)** sowie einem aktiven, thermisch induzierte Doppelbrechung aufweisenden Medium **(19)** verwendet. Die Strahlungsauskoppeleinrichtung **(20)** ist derart ausgebildet, dass lediglich eine vorgegebene Polarisation **(27p)** der im Resonator **(15)** schwingungsfähigen Strahlungsfelder **(23s, 25p)** der Laserstrahlung mit einem vorgegebenen Auskopplungsgrad **(T_p)** aus dem Resonator **(15)** teilweise auskoppelbar ist und alle anders polarisierten Strahlungsfelder sowie der verbleibende Anteil des teilweise auskoppelbaren Strahlungsfeldes bis auf eine Toleranz vollständig reflektierend im Resonator **(15)** verbleiben.

    Zwischen den Strahlungsfelder im Laseresonator wird vorzugsweise ein Energietransfer vorgenonmmen. Dieser Energietransfer kann mit einer Phasenverzögerung in einer vorgegebenen Polarisationsrichtung vorgenommen werden. So kann das Energietransferelement ein doppelbrechendes Element, vorzugsweise ein thermisch doppelbrechender Laserkristall, eine λ/4-Platte oder ein Faraday-Rotator sein. Im Gegensatz zum Stand der Technik wird nun nicht mehr versucht eine thermische Doppelbrechung in Laserkristall zu eliminieren. Im Gegenteil, es wird die induzierte thermische Doppelbrechung geradezu ausgenützt um einfach aufzubauende Laserresonatoren zur Erzeugung polarisierter Strahlung mit hohem Wirkungsgrad und einfacher Justage und damit mit ausgezeichneter Strahlungsstabilität zu schaffen.

Fig. 2

**Beschreibung**

**Technisches Gebiet**

Die Erfindung betrifft ein Verfahren zur Erzeugung polarisierter Laserstrahlung gemäß Patentanspruch 1 und einen Laserresonator zur Erzeugung einer polarisierten Laserstrahlung gemäß dem jeweiligen Oberbegriff des Patentanspruchs 5 bzw. 11.

Unter Resonatorspiegeln werden Spiegel verstanden, zwischen denen ein Strahlungsfeld oszilliert. Jeder Oszillator hat in der Regel einen hochreflektierenden Spiegel und einen Auskoppelspiegel mit einer etwas niedrigeren Reflektion, über den ein Teil des Strahlungsfeldes zur Verwendung für verschiedenste Zwecke ausgekoppelt wird. Spiegel innerhalb des Resonators, welche zur Strahlungsumlenkung oder andere Zwecke verwendet werden, werden hier nicht als Resonatorspiegel verstanden.

Unter einem Polarisationszustand bzw. einer Polarisationsverteilung werden im unten beschriebenen, erfindungemäßen Verfahren bzw. dem erfindungsgemäßen Laserresonator lineare und zirkulare Polarisationen verstanden. Es fallen hierunter aber auch radial verlaufende bzw. ausgerichtete Polarisationszustände sowie tangential verlaufende bzw. ausgerichtete, wie sie insbesonders bei zylindersymmetrisch gepumpten, thermisch doppelbrechenden Laserstäben auftreten können. Weiter fallen hierunter auch sonstige über den Strahlquerschnitt beliebige, örtlich sich ändernde Polarisationsrichtungen.

**Darstellung der Erfindung**

**Aufgabe der Erfindung**

Die Aufgabe der Erfindung ist es, einen einfach aufzubauenden, Laserresonator zur Erzeugung polarisierter Strahlung mit hohem Wirkungsgrad und einfacher Justage und damit mit ausgezeichneter Strahlungsstabilität zu schaffen.

**Lösung der Aufgabe**

Die Aufgabe wird dadurch gelöst, dass von den im Laserresonator oszillierenden Strahlungsfeldern nur ein Strahlungsfeld (Strahlung) mit einer vorgegebenen Polarisationsverteilung teilweise ausgekoppelt wird. Die restlichen Strahlungen verbleiben unter Einschluss des im Resonator verbleibenden Anteils der teilweise ausgekoppelten Strahlung oszillierend im Resonator. Hierzu wird ein Laserresonator mit einem hochreflektierenden Resonatorspiegel und einer Strahlungsauskoppeleinrichtung sowie einem aktiven Medium verwendet. Die Strahlungsauskoppeleinrichtung ist derart ausgebildet, dass lediglich eine vorgegebene, insbesondere eine einzige Polarisation aus den im Resonator schwingenden, eine beliebige Polarisation aufweisenden Strahlungsfeldern mit einem vorgegebenen Auskopplungsgrad aus dem Resonator auskoppelbar ist. Alle anders polarisierten Strahlungsfelder sowie das jeweils restliche Strahlungsfeld der teilweise ausgekoppelten Strahlung verbleiben vollständig bis auf eine Toleranz reflektierend im Resonator.

Vorzugsweise lässt man sämtliche Strahlungsfelder im Laserresonator zwischen den beiden Resonatorspiegeln oszillieren.

Zwischen den Strahlungsfelder im Laseresonator wird vorzugsweise ein Energietransfer vorgenommen. Dieser Energietransfer kann mit einer Phasenverzögerung in einer vorgegebenen Polarisationsrichtung vorgenommen werden. So kann das Energietransferelement ein doppelbrechendes Element, vorzugsweise ein thermisch doppelbrechender Laserkristall, eine $\lambda$/4-Platte oder ein Faraday-Rotator sein. Auf die unterschiedlichen Einsätze wird unten eingegangen.

Für die Strahlungsauskopplung kann auch ein nicht-lineares optisches Element im Resonator verwendet werden. Mit dem Element kann dann eine Frequenzvervielfachung vorgenommen werden. Der Auskoppelspiegel transmittiert dann bevorzugt vollständig lediglich die frequenzvervielfachte Strahlung.

Bei bisher bekannten Laserresonatoren mit thermisch induziert doppelbrechenden Festkörperlasermedien, wie sie vorzugsweise bei Hochleistungslasern verwendet werden, hat man große Anstrengungen erbracht, um gerade diese thermisch induzierte Doppelbrechung zu kompensieren. Gegenüber bekannten Laserresonatoren mit einem eine thermisch induzierte Doppelbrechung aufweisenden aktiven Medium schlägt die Erfindung nun einen anderen Weg vor. Bei der Erfindung muss nämlich nicht mehr die thermische Doppelbrechung kompensiert werden; im Gegenteil sie wird ausgenützt. In einigen Ausführungsvarianten wird gerade das thermisch induziert, doppelbrechende aktive Festkörpermedium u. a. als Element zum Energietransfer zwischen den unterschiedlich polarisierten Strahlungsfeldern im Resonator ausgenützt. Man achtet darauf, dass in einer Ausführungsvariante im Resonator sämtliche Strahlungsfelder in sich zurückreflektiert werden und nur das Strahlungsfeld mit dem gewünschten Polarisationszustand bzw.

einer gewünschten Polarisationsverteilung mit einer vorgegebenen Transmission ausgekoppelt wird.

Optische Resonatoren, in denen die thermisch induzierte Doppelbrechung des aktiven Mediums durch optische Elemente im Resonator kompensiert wird, sind beispielsweise in N. Hodgson, H. Weber, "Optical Resonators", beginnend Seite 298 Springer-Verlag 1997 und in der DE-A 44 15 511 dargestellt und beschrieben.

Bei der Erfindung könnten auch mehrere vorgegebene Polarisationsrichtungen ausgekoppelt werden; man wird sich aber bevorzugt auf nur eine beschränken.

Die Strahlungsauskoppeleinrichtung der Erfindung weist bevorzugt einen Auskoppelspiegel auf, der lediglich eine Laserstrahlung mit einem vorgegebenen Polarisationszustand bzw. einer — verteilung und einer vorgegebenen Wellenlänge mit einem vorgegebenen Transmissionsgrad transmittiert. Ein derartiger Spiegel ist beispielsweise in Rong-Chung Tyan, Pang-Chen Sun, Axel Scherer und Yeshayahu Fainman, "Polarizing Beam Splitter Based on the Anisitrpic Spectral Refelctivity Characteristic of Form-birefringent Multilayer Gratings", Optics Letters, Vol.21, No. 10, May 15, 1996, Seite 761 bis 763 sowie in N. Bel'tyugov et al., SPIE Vol. 1782, 1992, 206-212 beschrieben. Ferner ist ein derartiger Spiegel in PCT/EP 00/07540 beschrieben.

Als Strahlungsauskoppeleinrichtung kann auch ein nicht-lineares optisches Element verwendet werden, welches bevorzugt im Resonator eine Frequenzvervielfachung der dort schwingungsfähigen Strahlungsfelder macht. Als Auskoppelspiegel wird dann ein Spiegel eingesetzt, der lediglich eines der frequenzvervielfachten Strahlungsfelder mit einem vorgegebenen Transmissionsfaktor insbesondere vollständig transmittiert.

Für einen Energietransfer zwischen den Strahlungsfeldern im Laserresonator kann, wie bereits oben angedeutet, ein optisches Element mit Doppelbrechung, insbesondere mit thermisch induzierter Doppelbrechung verwendet werden. D. h. für den Energietransfer kann bei Festkörperlasern z. B. bereits der thermisch doppelbrechende Laserkristall als aktives Medium dienen.

Das Energietransferelement kann auch eine phasenverzögernde (phasendrehende) Wirkung für die im Resonator schwingungsfähigen Strahlungsfelder aufweisen und vorzugsweise als $\lambda/4$-Platte ausgebildet sein bzw. dessen optische Wirkung zeigen. Es kann auch als Faraday-Rotator ausgebildet sein.

Wie die unten aufgeführte Theorie zeigt, sollte im erfindungsgemäßen Laserresonator eine Depolarisation von größer als 30% pro Resonatorumlauf der Resonatorstrahlungsfelder erreicht werden. Im Allgemeinen erzeugt die thermisch induzierte Doppelbrechung bei Hochleistungslaserkristallen eine starke Kopplung. Bei geringen Pumpleistungen, bei denen die Depolarisation gering ist, kann eine "ausreichende" Depolarisation durch zusätzliche Elemente wie eine $\lambda/4$-Platte, ein Farady-Rotator usw. erreicht werden.

Es können aber auch von den im Resonator anschwingbaren Strahlungsfelder lediglich nur diejenigen bis auf einen Auskopplungsgrad rückgekoppelt werden, welche durch die thermisch induzierte Doppelbrechung des aktiven Mediums nicht depolarisiert werden. In diesem Fall reflektiert dann wenigstens einer der beiden Resonatorspiegel lediglich nur Strahlungsfelder mit einer Polarisationsverteilung, welche beim Durchgang durch das aktive Medium keine Depolarisation erfahren und alle Strahlungsfelder mit anderen Polarisationszustände nicht oder nur zu einem geringen Anteil, der nicht zum Anschwingen ausreicht, damit im Resonator keine anderen Strahlungsfelder mit anderen Polarisationszuständen anschwingen können. Mit einer derartigen Spiegelbeschichtung kann nun der hochreflektierende Spiegel oder der Auskoppelspiegel oder auch beide (was jedoch keinen Vorteil bringt) versehen werden.

Mit dem erfindungsgemäßen Laserresonator bzw. dessen Ausführungsvarianten lassen sich Hochleistungslaser mit guter Strahlqualität herstellen. Eine gute Strahlqualität z. B. mit einer zirkularen Polarisation wird z. B. bei industriellen Lasern zum Materialschneiden verwendet.

**Kurze Beschreibung der Zeichnungen**

Im Folgenden werden Beispiele des erfindungsgemäßen Verfahrens bzw. Laserresonators anhand der nachfolgenden Zeichnungen näher erläutert. Weitere Vorteile der Erfindung ergeben sich aus dem Beschreibungstext. Es zeigen:

Fig. 1    eine schematische Darstellung des erfindungsgemäßen Laserresonators mit einem thermisch doppelbrechenden Laserkristall,

Fig. 2    eine Variante zu dem in **Figur 1** dargestellten Laserresonator mit einer $\lambda/4$-Platte,

Fig. 3    eine weitere Ausführungsvariante des erfindungsgemäßen Laserresonators mit einem gekippten Auskoppelspiegel,

Fig. 4    eine weitere Ausführungsvariante mit einem nicht-linearen optischen Element, und

Fig. 5    die Laserausgangsleistung $P_{out}$ aus dem erfindungsgemäßen Laserresonator gemäß **Figur 2,** aufgetragen über der Polarisationslebensdauer $T_{Depol}$.

**Wege zur Ausführung der Erfindung**

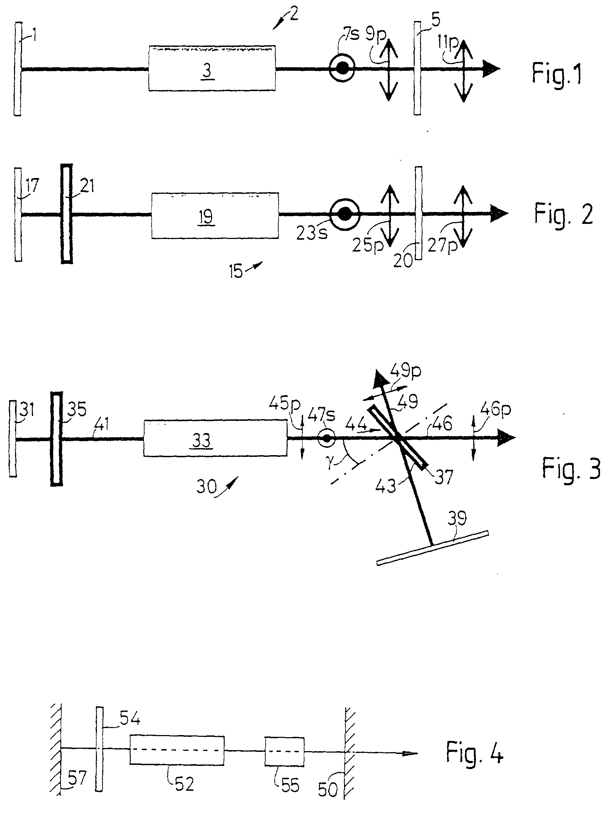

Der in **Figur 1** dargestellte Laserresonator **2** hat einen hochreflektierenden Spiegel (gelegentlich auch 100 %-Spiegel genannt) **1**, ein aktives Medium **3** und eine Strahlungsauskoppeleinrichtung **5**. Das aktive Medium **3** ist ein Nd:YAG Laserkristall mit einem Durchmesser von 4 mm und einer Länge von 28,8 mm. Er ist zwischen dem hochreflektierenden Spiegel **1** und der Auskoppeleinrichtung **5** angeordnet. Der Laserkristall **3** wird transversal über eine Länge von 10 mm von sechs Laserdioden mit einer Wellenlänge von $\lambda_p$ = 809 nm gepumpt. Die erzeugte Laserwellenlänge liegt bei $\lambda_l$ = 1,064 µm. Ein Laserkopf bestehend aus dem Laserkristall **3** und der Anordnung der pumpenden Laserdioden ist beispielsweise in A. Lucianetti et al., "Thermo-optical properties of transversal pumped composite YAG rods with Nd-doped core", IEEE Journal of Quantum Electronics, Vol. 36, Seite 220 - 227, Febr. 2000 beschrieben.

Der hochreflektierende Spiegel **1** hat für die Wellenlänge der zu erzeugenden Laserstrahlung $\lambda_l$ = 1,064 µm eine möglichst hohe Reflexion; d. h. bis auf eine Toleranz 100 %. Die Auskoppeleinrichtung **5** besteht hier aus einem polarisierenden Spiegel. Im eingeschwungenen Zustand schwingen im Laserresonator **2** eine Vielzahl von Strahlungsfelder (kann unter gewissen Voraussetzungen auch als Moden bezeichnet werden) mit allen möglichen Polarisationsrichtungen bzw. -zuständen. Angedeutet sind in **Figur 1** nur die senkrecht zur Zeichnungsebene schwingenden **7s** und die hierzu parallel schwingenden Strahlungsfelder **9p**. Alle anderen Strahlungsfelder können vektoriell in diese Richtung zerlegt werden. Der polarisierende Spiegel **5** ist nun derart ausgebildet, dass er für alle Strahlungsfelder bis auf die mit zur Zeichenebene parallele Polarisation **9p** einen Reflexionsgrad von 1 (bis auf eine Toleranz) hat. D. h. diese Strahlungsfelder werden vollständig in sich zurückreflektiert. Ein Teil der Energie der parallelpolarisierten Strahlungsfelder **9p** transmittiert jedoch diesen Spiegel **5** als Strahl **11**. Der Transmissionsgrad des Spiegels **5** richtet sich gemäß unten stehenden Ausführungen nach der Verstärkung des Laserkristalls **3** bzw. nach der Pumpleistung.

Der hochreflektierende Spiegel **1** hat einen Abstand $l_c$ von 210 mm vom polarisierenden Spiegel **5**. Der Abstand des Laserkristalls **3** vom hochreflektierenden Spiegel **1** beträgt 60 mm und vom polarisierenden Spiegel **5** beträgt er 35 mm.

Der in **Figur 2** dargestellte Resonator **15** hat analog zu dem in **Figur 1** dargestellten Resonator **2** ebenfalls einen hochreflektierenden Spiegel **17,** einen thermisch doppelbrechenden Laserkristall **19** als aktives Medium und einen polarisierenden Spiegel **20** als Strahlungsauskoppeleinrichtung. Zusätzlich enthält der Resonator **15** eine $\lambda$/4-Platte **21**. Die optische Achse der $\lambda$/4-Platte **21** ist hier um 45° zur Richtung der zur Zeichenebene parallel schwingenden Strahlungfelder angeordnet. Die $\lambda$/4-Platte **21** verwandelt die Polarisation des Strahlungsfeldes im Laserresonator **15** beim einmaligen Durchgang in ein zirkularpolarisiertes Strahlungsfeld und beim Rückweg nach einer totalen Reflexion am hochreflektierenden Spiegel **17** ein linearpolarisiertes Strahlungsfeld, welches jedoch gegenüber dem hinlaufenden Strahlungsfeld um 90° gedreht ist. Eine parallel zur Zeichenebene polarisiert schwingende Strahlung **p** wird dadurch in eine senkrecht **s** hierzu schwingende gedreht. Analog zur Darstellung in **Figur 1** sind auch hier die senkrechte Polarisationsrichtung **s** (senkrecht zur Zeichenebene schwingendes Strahlungsfeld bzw. einen in diese Richtung zerlegbaren Strahlungsvektor aufweisende Strahlung) mit **23s** und die hierzu um 90° gedreht, parallele Polarisationsrichtung **p** mit **25p** gekennzeichnet. Durch den polarisierenden Spiegel **20** tritt hier mit einer beispielsweisen vorgegebenen Transmission von 0,2 der nur eine parallele Polarisation **p** aufweisende Ausgangsstrahl **27p** hindurch.

Der Energietransfer zwischen den in unterschiedlichen Polarisationsrichtungen schwingenden Strahlungsfeldern (Moden) im Laserresonator **15**, wird hier durch die $\lambda$/4-Platte **21** vorgenommen und falls der Laserkristall **19** zudem doppelbrechend ist, durch Laserkristall **19** und $\lambda$/4-Platte **21**. Eine schwache thermische Doppelbrechung des Laserkristalls z. B. bei einer schwachen Pumpleistung wird eine durch den Polarisationszustand im Resonator ändernden Komponente, hier die $\lambda$/4-Platte **21** unterstützt.

Der in **Figur 3** dargestellte Resonator **30** hat analog zu dem in **Figur 2** dargestellten Resonator **15** ebenfalls einen hochreflektierenden Spiegel **31**, einen Laserkristall **33** als aktives Medium und eine $\lambda$-4-Platte **35**, deren Wirkung analog zur $\lambda$/4 Platte **21** ist. Als Strahlungsauskoppeleinrichtung ist hier jedoch ein geneigtes mit dielektrischen Schichten auf seinen Oberflächen versehenes optisches Element **37** und ein weiterer hochreflektierender Spiegel **39** vorhanden. Das optische Element **37** ist ein planparalleler, für die Laserstrahlung transparenter Körper. Es ist unter einem Winkel $\gamma$ zur optischen Resonatorachse **41** geneigt angeordnet und hat auf seiner dem Laserkristall **33** zugewandten Oberfläche **43** eine dielektrische Schichtenanordnung **44**, welche, wie hier angedeutet ist, parallel zur Zeichenebene ein polarisiertes Strahlungsfeld **45p** entsprechend dem gewünschten Auskopplungsgrad z. B, mit einer Transmission von 0,12 transmittiert. Die hierzu senkrecht polarisierten Strahlungsfelder **47s** werden nahezu vollständig reflekiert und über den hochreflektierenden Spiegel **39** in sich selbst zurückreflektiert. Da jedoch nur 12 % der parallel zur Zeichenebene polarisierten Strah lung als Ausgangsstrahl **46** mit einer p-Polarisation **46p** weggeführt wurden, werden die restlichen 88 % ebenfalls reflektiert und vom Spiegel **39** zurückreflektiert, wobei dann das optische Element **37** 12% als zweiten Ausgangsstrahl **49** mit ebenfalls einer p-Polarisation **49p** transmittiert. Die beiden Ausgangsstrahlen **46** und **49** können bevorzugt unter Berücksichtigung der unterschiedlichen Laufzeiten (zweimal Abstand Spiegel 39-optisches Element **37**) kohärent zu einem einzigen Strahl überlagert werden.

Auch hier schwingen sämtliche Resonatorstrahlungsfelder einen einzigen optischen Resonator (= eine einzige Eigenwertgleichung), nämlich hochreflektierender Spiegel **31** - λ/4-Platte **35** - Laserkristall **33** - optisches Element **34** - hochreflektierender Spiegel **39** und wieder zurück.

Der in Figur 4 dargestellte Laserresonator **53** ist analog zu dem in **Figur 2** gezeigten ebenfalls mit einem Laserkristall **52** als aktiven Medium, einer λ/4-Platte **54**, einem Auskoppelspiegel **50** und einem hochreflektierenden Spiegel **57** ausgebildet. Er hat allerdings als zusätzliches Element ein optisch nicht-linear arbeitendes Element **55**, mit dem eine Frequenzverdopplung vornehmbar ist. Der Auskoppelspiegel **50** ist derart ausgebildet, dass er die "frequenzverdoppelte" Strahlung durchlässt, die "nicht verdoppelte" Strahlung jedoch nicht.

Man kann nun einen polarisationsselektiven Resonatorspiegel derart ausbilden, dass nur Strahlungsfelder mit einer vorgegebenen Polarisationsverteilung reflektiert werden, nämlich für jene, welche beim Durchgang durch das thermisch induziert doppelbrechende, aktive Medium keine Depolarisation erfahren. Alle anders polarisierten Strahlungsfelder werden nicht oder nur zu einem geringen Teil von diesem Resonatorspiegel reflektiert. Diese anders polarisierten Strahlungsfelder können somit im Resonator nicht mehr anschwingen. Ein derartiger Laserresonator zur Erzeugung einer polarisierten Laserausgangsstrahlung weist dann nur noch das aktive Medium und die beiden Resonatorspiegel auf. Es kann nun der hochreflektierende Resonatorspiegel polarisationsselektiv ausgebildet werden oder auch der Auskoppelspiegel. Aus Kostengründen wird man jedoch den hochreflektierenden Resonatorspiegel polarisationsselektiv ausbilden; d. h. er reflektiert nur den einen vorgegebenen Polarisationszustand und alle anderen nicht oder nur gering. Der Auskoppelspiegel ist dann nicht mehr polarisationsselektiv ausgebildet. Bei zylindersymmetrisch gepumpten Festkörperlasermedien in Stabform ist diese Strahlung dann radial- oder tangential polarisiert. Werden andere Konfigurationen von aktiven Festkörpermedien sowie andere Anordnungen der Pumpquellen gewählt, ergeben sich andere örtliche Polarisationsverteilungen über den Laserstrahl. Der polarisationsselektive Spiegel muss dann entsprechend seiner Ausgestaltung angepasst werden.

Nachfolgend wird eine Abschätzung für eine Bemessung der Transmission der polarisierenden Spiegel **5** und **20** und auch für das optische Element **37** vorgenommen. Aufgrund der thermischen Doppelbrechung im Laserkristall **3**, **19** bzw. **33** besteht eine Wechselwirkung zwischen den Photonen der beiden zueinander senkrechtstehenden Polarisationrichtungen **s** und **p** bzw. **7s** und **9p, 23s** und **25p** bzw. **47s** und **45p**. D. h. beide Polarisationsrichtungen **7s** und **9p, 23s** und **25p,** bzw. **47s** und **45p** sind über eine Polarisationslebenszeit $T_{Depol}$ miteinander verknüpft. $T_{Depol}$ ist ein Maß für die Zeitdauer, in der sich ein Photon in einem Polarisationszustand befindet, bevor es in den anderen überwechselt.

Ausgehend von einem Vier-Niveau-System, wie es beispielsweise für eine Wellenlänge von 1,064 μm bei einem Nd:YAG-Kristall gilt, ergibt sich für die Änderung der Anzahl von Ionen pro Volumeneinheit im Grundniveau (mit teifgestelltem "g" gekennzeichnet) pro Zeiteinheit

$$\frac{dn_g}{dt} = \frac{n_l}{T_l} - P_n(n_g) + \frac{n_u}{T_u} \cdot \beta_{ug} \cdot$$

Für die zeitliche Änderung der Anzahl von Ionen pro Volumeneinheit im direkt über dem Grundzustand liegenden tiefen Niveau (mit tiefgestelltem "l" gekennzeichnet) gilt

$$\frac{dn_l}{dt} = \frac{n_u}{T_u} \cdot \beta_{ul} + (\phi_s + \phi_p) \cdot c \cdot \sigma \cdot (n_u - n_l) - \frac{n_l}{T_l} \cdot$$

$n_u$ ist die Anzahl pro Volumeneinheit von Ionen im oberen angeregten Niveau und $n_l$ diejenige im tieferen Niveau.

$$\frac{dn_u}{dt} = Pw(n_g) - \frac{n_u}{T_u} - (\phi_s + \phi_p) \cdot c \cdot \sigma \cdot (n_u - n_l)$$

$$\frac{d\phi_s}{dt} = \phi_s\, c \cdot \sigma \cdot (n_u - n_l) \cdot \frac{l_k}{l_c} - \frac{\phi_s}{T_s} + \frac{1}{T_{Depol}} \cdot (\phi_p - \phi_s) + \frac{n_u}{T_u} \cdot \beta_{ul} \cdot \frac{l_k}{l_c}$$

$$\frac{d\phi_p}{dt} = \phi_p\, c \cdot \sigma \cdot (n_u - n_l) \cdot \frac{l_k}{l_c} - \frac{\phi_p}{T_p} + \frac{1}{T_{depol}} \cdot (\phi_s - \phi_p) + R \cdot \frac{n_u}{T_u} \cdot \beta_{ul} \cdot \frac{l_k}{l_c}$$

$\phi_s$ und $\phi_p$ ist die Anzahl Photonen pro Volumeneinheit in der s bzw. p-Polarisationsrichtung. Die Lebensdauer des oberen Laserniveaus ist $T_u$ = 230 µs und diejenige des tieferen Laserniveaus $T_l$ = 30 ns. $\beta_{ul}$ und $\beta_{ug}$ werden als "branching"-Verhältnis bezeichnet und haben die Werte 0,8 und 0,2. R ist ein Strahlungsparameter und gibt die Wahrscheinlichkeit an, mit der ein spontan emittiertes Photon im Resonator verbleibt. R = $10^{-4}$. c ist die Lichtgeschwindigkeit. $I_k$ ist die "pumpbare" Länge des Laserkristalls. $I_c$ ist die Resonatorlänge. $\sigma$ ist der Wirkungsquerschnitt für die stimulierte Emission und beträgt $2,8 \cdot 10^{-19}$ cm$^2$. Die Lebensdauern der Photonen im Resonator für die beiden Polarisationsrichtung ergibt sich zu

$$T_{s,p} = \frac{2 \cdot I_c}{c \cdot [V - \ln(1 - T_{s,p})]}$$

wobei V die internen Verluste angibt und $T_s$ sowie $T_p$ die Transmission des polarisierenden Spiegels für s- bzw. p-Polarisationsrichtung. Da nur ein Teil der Strahlung mit der p-Polarisation ausgekoppelt wird und die s-Polarisation vollständig reflektiert wird, ist $T_s$ = 0.

Die Funktion $P_n(n_g)$ gibt die Anzahl angeregter Ionen infolge von absorbierter Pumpstrahlung pro Zeiteinheit und pro Volumeneinheit an

$$P_n(n_g) = \frac{P_p \cdot \eta_{trans}}{h \cdot v_p \cdot \pi \cdot r_p^2 \cdot I_k} \cdot \left[ 1 - e^{\sigma_{abs} \cdot n_g \cdot I_k} \right] \ .$$

$P_p$ ist die Pumpleistung und $\eta_{trans}$ ein optischer Übertragungskoeffizient für die Pumpstrahlung. $v_p$ ist die Frequenz der Pumpstrahlung; sie beträgt $3,708 \cdot 10^{14}$ Hz. $\sigma_{abs}$ ist der Absorptionsquerschnitt für die Pumpstrahlung; er beträgt $3 \cdot 10^{-18}$ mm$^2$. $r_p$ ist der Radius des Laserkristalls; er ist 2 mm.

Zum Abschätzen der Polarisationslebensdauer $T_{Depol}$ wird die thermisch induzierte Doppelbrechung im Laserkristall in Betracht gezogen. Ein allgemeines analytisches Modell hierzu ist in M. Schmid et al., "Analytical model of the temperature distribution and the thermally birefrigence in laser rods with cylindrically symmetric heating", J. Opt. Soc. Am. B; Vol. 17, No. 8, Aug. 2000, Seiten 1398 - 1404 beschrieben. Das Kopplungsverhältnis von Photonen, welche in einem einzigen Durchgang ihre Polarisation ändern, ist

$$D_{Depol} = D_{biref} = \frac{1}{\pi \cdot r^2} \int_0^{r_{rod}} \int_0^{2\pi} b(r',\varphi) \, f_{beam}(r') r' d\varphi \, dr' \ .$$

$b(r', \varphi)$ beschreibt die thermische Doppelbrechung, welche gemäß oben erwähnter Literaturstelle berechenbar ist. $D_{biref}$ ist die mittlere thermisch induzierte Doppelbrechung innerhalb des Laserstrahls. Der Wert von $D_{biref}$ liegt zwischen 0 und 0,5. Befindet sich die λ/4-Platte **21** im Resonator **15**, so erfahren alle Photonen eine Polarisationsdrehung von 90 ° bei einem Resonatorumlauf. Infolge der thermischen Depolarisation wird ein Teil der durch die λ/4-Platte **21** verursachten Drehung der Polarisation aufgehoben.

$$D_{Depol} = 1 - D_{biref},$$

$D_{Depol}$ liegt somit zwischen 0,5 und 1.
Die Polarisationslebensdauer ergibt sich hieraus zu

$$T_{depol} = \frac{2 \cdot I_c}{c \cdot D_{depol}}$$

Zur numerischen Analyse der Bilanzgleichungen ist die räumliche Verteilung der Pumplichtstrahlung und die räumliche Energieverteilung im Laserstrahl zu berücksichtigen.
Bei den nachfolgenden Berechnungen handelt es sich um eine näherungsweise Abschätzung, welche mit der vierten Ordnung der Runge-Kutta-Methode durch MathCad erfolgt ist. Die Länge $I_c$ des Laserresonators ist 210 mm. Der Laserkristall hat eine Länge von 28,8 mm und einen Radius $r_c$ vom 2 mm. 10 mm ($l_k$) des Laserkristalls werden von der Pumplichtstrahlung $P_p$ bestrahlt. Es wird vorausgesetzt, dass der Laserkristall homogen bestrahlt wird. Die internen Verluste V sind 0,05 und der optische Übertragungskoeffizient $\eta_{trans}$ ist 0,8.

Es wird zuerst der Einfluss der Depolarisation $D_{depol}$ und der Transmission des polarisierenden Spiegels **20** auf die Laserausgangsleistung $P_{out}$ betrachtet ($T_s$ = 0 gemäß Definition). Die Pumpleistung $P_p$ ist 196 W.

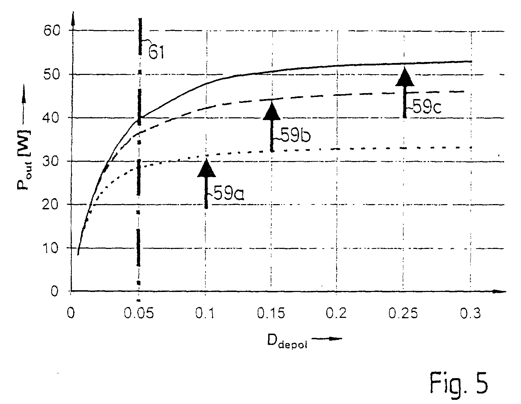

In **Figur 5** ist die Laserausgangsleistung $P_{out}$ in Watt [W] als Funktion des Kopplungsverhältnisses $D_{Depol}$ für unterschiedliche Transmission des polarisierenden Spiegels **20** für die s-Polarisation aufgetragen; die Transmission für die p-Polarisation ist immer 0. Die ausgezogene Linie gilt für eine Transmission von 0,2, die gestrichelte für eine Transmission von 0,1 und die punktierte Linie für eine Transmission von 0,05. Mit der hier gewählten numerischen Methode konnte eine Transmission größer als 0,3 nicht mehr berücksichtigt werden. Die vertikalen nach oben gerichteten Pfeile **59a** bis **59c** markieren Kurvenorte, an denen die Lebensdauer der Photonen mit der p-Polarisation $T_p$ gleich der Polarisationslebensdauer $T_{Depol}$ ist. Die vertikal verlaufende strichpunktierte Linie **61** in **Figur 5** gibt die Kurvenorte an, an denen $T_{Depol} = T_s$ ist. Obwohl die Transmission für die s-Polarisation Null ist, bestehen natürlich auch für diese Polarisationsrichtung Verlust im Resonator.

Die Laserausgangsleistung $P_{out}$ hängt für einen Bereich $T_{Depol} > T_s$ stark vom Polarisationkopplungsverhältnis $T_{Depol}$ ab. Es gibt aber auch einen Sättigungsbereich für $T_{Depol} < T_p$. Für ein effizientes Arbeiten sollte somit $T_{Depol} < T_p$ sein.

Wenn $T_{Depol}$ kleiner ist als $T_p$, erfolgt eine Wechselwirkung zwischen beiden Polarisationsrichtungen derart schnell, dass die den Resonator verlassenden Photonen durch Photonen der anderen Polarisationsrichtung ersetzt werden.

**Patentansprüche**

1. Verfahren zur Erzeugung polarisierter Laserausgangsstrahlung **(11p; 27p; 46p, 49p)** mit einem Laserresonator **(2, 15, 30; 53)**, dessen aktives Medium **(3; 19; 33; 52)** thermisch induzierte Doppelbrechung aufweist, **dadurch gekennzeichnet, dass** die im Laserresonator **(2, 15, 30; 53)** oszillierenden Strahlungsfelder **(7s, 9p; 23s, 25p; 47s, 45p)** lediglich nur durch wenigstens einen der beiden Resonatorspiegel eine Polarisationsselektion erfahren und aus den Strahlungsfeldern **(7s, 9p; 23s, 25p; 47s, 45p)** lediglich nur das Strahlungsfeld **(11p; 27p; 46p; 49p)** mit dem gewünschten Polarisationszustand **(p)** teilweise ausgekoppelt wird.

2. Verfahren nach Anspruch 1, **dadurch gekennzeichnet, dass** zwischen den im Resonator **(2, 15, 30; 53)** oszillierenden Strahlungsfeldern **(7s, 9p; 23s, 25p; 47s, 45p)** ein Energietransfer vorgenommen wird.

3. Verfahren nach Anspruch 2, **dadurch gekennzeichnet, dass** der Energietransfer durch eine Phasenverzögerung in einer vorgegebenen Polarisationsrichtung vorgenommen wird.

4. Verfahren nach Anspruch 1, **dadurch gekennzeichnet, dass** von den im Resonator anschwingbaren Strahlungsfelder lediglich nur diejenigen bis auf einen Auskopplungsgrad rückgekoppelt werden, welche durch die thermisch induzierte Doppelbrechung des aktiven Mediums nicht depolarisiert werden.

5. Laserresonator **(2, 15, 30; 53)** zur Erzeugung einer polarisierten Laserausgangsstrahlung **(11p; 27p; 46p, 49p)** mit einem Verfahren gemäß der Patentansprüche 1 bis 3 mit einem hochreflektierenden Resonatorspiegel (**1; 17; 31; 57**) und einer Strahlungsauskoppeleinrichtung **(5; 20; 37; 50, 55)** sowie einem aktiven, thermische Doppelbrechung aufweisenden Medium **(3; 19; 33; 52)**, **dadurch gekennzeichnet, dass** die Strahlungsauskoppeleinrichtung **(5; 20; 37; 50, 55)** derart ausgebildet ist, dass lediglich nur ein vorgegebener Polarisationzustand bzw. eine vorgegebene Polarisationsverteilung **(11p; 27p 46p, 49p)** der im Resonator **(2, 15, 30; 53)** schwingungsfähigen Strahlungsfelder **(7s, 9p; 23s, 25p; 47s, 45p)** der Laserstrahlung mit einem vorgegebenen Auskopplungsgrad (**Tp**) aus dem Resonator **(2, 15, 30; 53)** teilweise auskoppelbar ist und alle anders polarisierten Strahlungsfelder sowie der verbleibende Anteil des teilweise auskoppelbaren Strahlungsfeldes bis auf eine Toleranz vollständig reflektierend im Resonator (**2, 15, 30; 53**) verbleiben.

6. Laserresonator nach Anspruch 5, **dadurch gekennzeichnet, dass** im Resonator **(2, 15, 30; 53)** wenigstens ein optisches Energietransferelement **(3; 21; 19; 33; 35; 52, 54, 55)** vorhanden ist, welches einen nicht vernachlässigbaren Energietransfer zwischen den unterschiedlich polarisierten Strahlungsfeldem **(7s, 9p; 23s, 25p; 47s, 45p)** im Resonator **(2, 15, 30; 53)** bewirkt.

7. Laserresonator **(2, 15, 30; 53)** nach Anspruch 5 oder 6, **dadurch gekennzeichnet, dass** die Strahlungsauskoppeleinrichtung **(5; 20; 37; 50, 55)** einen Auskoppelspiegel **(5; 20; 37; 50)** aufweist, der lediglich eine vorgegebene Polarisationsverteilung **(p)** der Strahlungsfelder im Resonator **(2, 15, 30; 53)** mit einem vorgegebenen Transmissionsgrad **(Tp)** transmittiert und bevorzugt sämtliche Strahlungsfelder **(7s, 9p; 23s, 25p; 47s, 45p)** zwischen ein- und denselben beiden Resonatorspiegeln oszillieren.

8. Laserresonator **(2, 15, 30; 53)** nach Anspruch 6, **dadurch gekennzeichnet, dass** das Energietransferelement **(3, 19; 33; 52)** Doppelbrechung, insbesondere thermisch induzierte Doppelbrechung für die im Resonator **(2, 15, 30; 53)** schwingungsfähigen Strahlungsfelder aufweist.

9. Laserresonator **(15, 30; 53)** nach Anspruch 6, **dadurch gekennzeichnet, dass** das Energietransferelement eine phasenverzögernde Wirkung für einen Polarisationszustand der im Resonator schwingungsfähigen Strahlungsfelder aufweist und vorzugsweise als $\lambda$/4-Platte **(21; 35; 54)** ausgebildet ist bzw. dessen optische Wirkung zeigt oder insbesondere als Faraday-Potator ausgebildet ist bzw. dessen optische Wirkung zeigt.

10. Laserresonator **(53)** nach Anspruch 9, **dadurch gekennzeichnet, dass** die Strahlungsauskoppeleinrichtung ein nicht-lineares optisches Element **(55)**, welches bevorzugt im Resonator **(53)** eine Frequenzvervielfachung der dort schwingungsfähigen Strahlungsfelder macht, und einen Auskoppelspiegel **(50)** hat, der lediglich die frequenzvervielfachte Strahlung mit einem vorgegebenen Transmissionsfaktor, insbesondere vollständig transmittiert.

11. Laserresonator **(2)** zur Erzeugung einer polarisierten Laserausgangsstrahlung **(11p)** nach einem Verfahren gemäß der Patentansprüche 1 oder 4 mit einem hochreflektierenden Resonatorspiegel (**1**) und einem Auskopplungsresonatorspiegel (**5**) sowie einem aktiven, eine thermisch induzierte Doppelbrechung aufweisenden Medium **(3), dadurch gekennzeichnet, dass** wenigstens einer der beiden Resonatorspiegel **(1)** lediglich nur Strahlungsfelder mit einer Polarisationsverteilung reflektiert, welche beim Durchgang durch das aktive Medium (**3**) keine Depolarisation erfahren, und alle Strahlungsfelder mit anderen Polarisationszustände nicht oder nur zu einem geringen Anteil, der nicht zum Anschwingen ausreicht, reflektiert, damit im Resonator (**2**) keine anderen Strahlungsfelder mit anderen Polarisationszuständen anschwingen können.

Fig.1

Fig. 2

Fig. 3

Fig. 4

Fig. 5

Europäisches Patentamt

# EUROPÄISCHER RECHERCHENBERICHT

Nummer der Anmeldung

EP 01 81 0855

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | US 3 914 710 A (YOUNG DONALD S) 21. Oktober 1975 (1975-10-21) * Zusammenfassung; Abbildung 1 * | 1 | H01S3/098 |
| A | CLARKSON W A ET AL: "Simple method for reducing the depolarization loss resulting from thermally induced birefringence in solid-state lasers" OPTICS LETTERS, 15 JUNE 1999, OPT. SOC. AMERICA, USA, Bd. 24, Nr. 12, Seiten 820-822, XP002161198 ISSN: 0146-9592 * Zusammenfassung * | 1 | |
| A | GIULIANI G ET AL: "Polarization flip cavities: a new approach to laser resonators" OPTICS COMMUNICATIONS, OCT. 1980, NETHERLANDS, Bd. 35, Nr. 1, Seiten 109-112, XP002161200 ISSN: 0030-4018 * Zusammenfassung * | 1 | **RECHERCHIERTE SACHGEBIETE** (Int.Cl.7)<br><br>H01S |
| A | PIGEON F ET AL: "Polarizing grating mirror for CW Nd:YAG microchip lasers" IEEE PHOTONICS TECHNOLOGY LETTERS, JUNE 2000, IEEE, USA, Bd. 12, Nr. 6, Seiten 648-650, XP000980698 ISSN: 1041-1135 * Zusammenfassung * | 1 | |

Der vorliegende Recherchenbericht wurde für alle Patentansprüche erstellt

| Recherchenort | Abschlußdatum der Recherche | Prüfer |
|---|---|---|
| DEN HAAG | 13. Dezember 2001 | Galanti, M |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 01 81 0855

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-12-2001

| Im Recherchenbericht angeführtes Patentdokument | Datum der Veröffentlichung | Mitglied(er) der Patentfamilie | Datum der Veröffentlichung |
|---|---|---|---|
| US 3914710 A | 21-10-1975 | KEINE | |

Für nähere Einzelheiten zu diesem Anhang : siehe Amtsblatt des Europäischen Patentamts, Nr. 12/82